# EUROPEAN PATENT SPECIFICATION

(11) **EP 0 547 007 B1**
(45) Date of publication and mention of the grant of the patent: **02.01.1997**
(21) Application number: 92830634.9
(22) Date of filing: 20.11.1992
(51) Int. Cl.: F16H 63/18

(54) **A device for operating a motor-vehicle gearbox**
Einrichtung zur Betätigung eines Kraftfahrzeuggetriebes
Dispositif de commande d'une boîte de vitesse d'un véhicule automobile

(30) Priority: 11.12.1991 IT TO910966
(43) Date of publication of application: 16.06.1993
(73) Proprietor: FIAT AUTO S.p.A., 10135 Torino (IT)
(72) Inventor: Garrone, Felice, I-10137 Torino (IT); Montanaro, Enrico, I-10095 Grugliasco (Torino) (IT)
(74) Representative: Quinterno, Giuseppe

(56) References cited:
- EP-A- 0 155 043
- EP-A- 0 187 117
- DE-A- 2 053 685
- DE-A- 3 037 990

## Description

The present invention relates, in general, to motor-vehicle gearboxes. In particular, it concerns a device for operating a gearbox of the type with permanently-meshed gears of the type defined in the pre-characterising portion of appended claim 1.

A device of the type indicated above is known by EP-A-155 043.

DE-A-2 053 685 discloses a device for operating a gearbox, containing a hydraulic actuator for propelling a shift drum.

An operating device of the aforesaid type is normally operated by a lever which can be moved so as to move slidable rods by means of a transmission system; the slidable rods entrain the fork-shaped elements, causing the axial movement of engagement sleeves by means of which the gears carried by the layshaft of the gearbox are selectively made fast with the layshaft. The transmission system may be a mechanical system with rods and lever mechanisms or may be a pressurised-fluid servo-control system.

The object of the present invention is to provide an operating device of the servo-control type indicated above, which is particularly compact and is very effective and precise in operation.

This object is achieved by virtue of the features stated in claim 1.

By virtue of these characteristics, the device according to the invention is marked by a very compact size combined with a fairly simple structure and enables the gears to be engaged with considerable precision.

Further characteristics and advantages of the present invention will become clear from the description which follows with reference to the appended drawings provided purely by way of non-limiting example, in which:
- Figure 1 is a partially-sectioned schematic, perspective view of an operating device according to the invention,

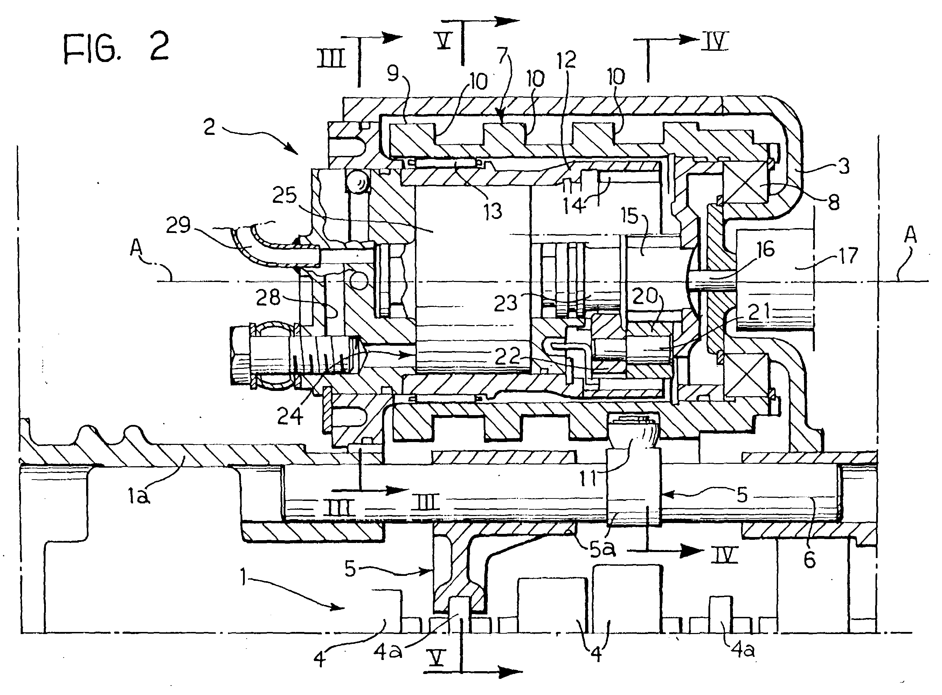

Figure 2 is a longitudinal section of the device of Figure 1,

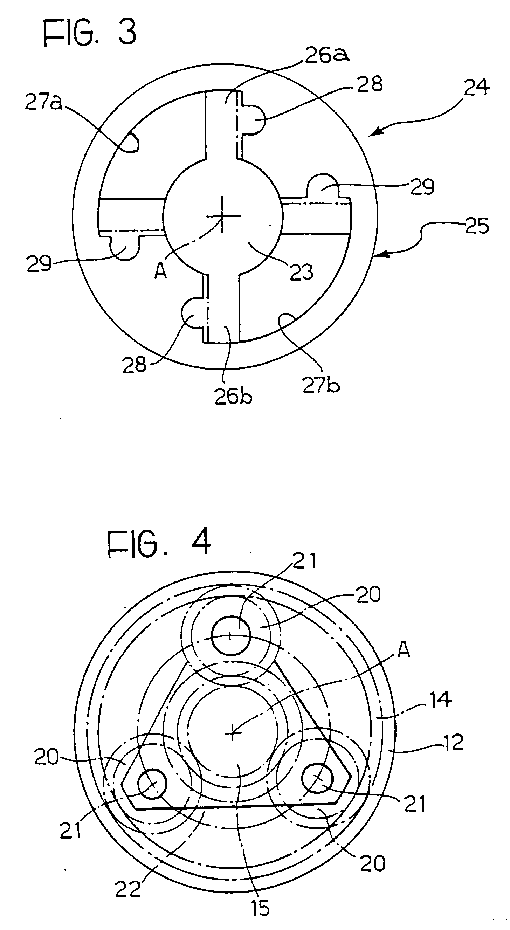

Figure 3 is a transverse section taken on the line III-III of Figure 2,
Figure 4 is a transverse section taken on the line IV-IV of Figure 2, and

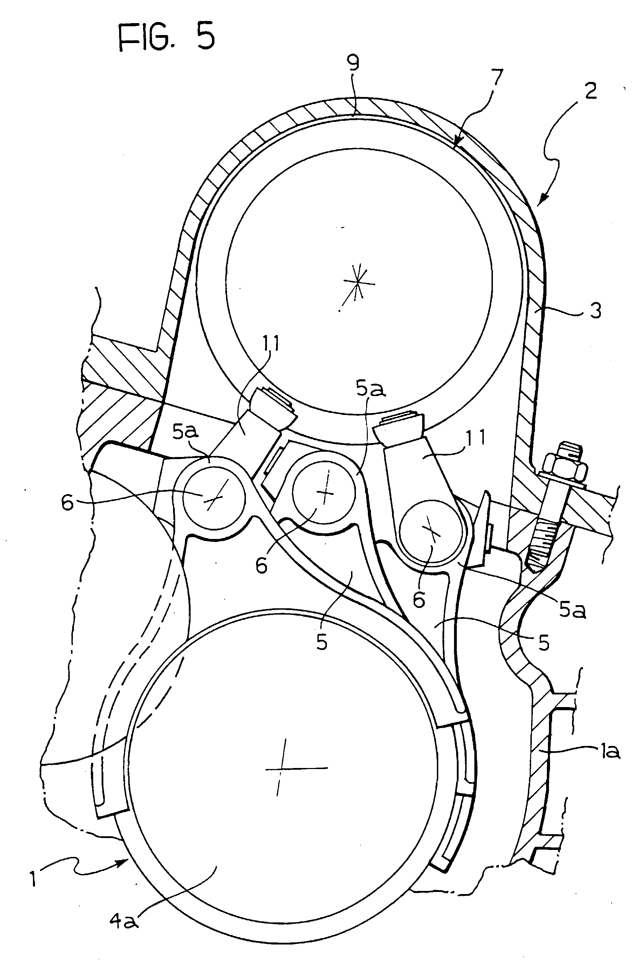

Figure 5 is a transverse section taken on the line V-V of Figure 2.

With reference to the drawings, a motor-vehicle gearbox of the type with permanently-meshed gears is generally indicated 1. The gearbox 1 is housed in a housing 1a and above the gearbox (with reference to the drawings) is an operating device 2 enclosed in a casing 3 which is rigidly connected to the gearbox housing 1a.

In known manner, the gearbox housing 1a encloses a plurality of gears 4 which are normally idle on the layshaft of the gearbox but can be coupled for rotation therewith by frontal engagement sleeves 4a which can be moved axially by fork-shaped elements 5 (of which there are three in the embodiment illustrated) which are connected rigidly by eyes 5a to respective slidable rods 6 supported by the gearbox housing 1a.

The device 2 for operating the gearbox comprises a rotary drum 7, which is supported on the casing 3 by means of ball bearings 8 and the axis A of which is parallel to the line of movement of the forks 5. The outer surface 9 of the drum 7 has three guide cams 10, each engaged by a cam follower 11 which is integral with or rigidly connected by an eye to a respective fork 5 or rod 6. The cams 10 are constituted by substantially circumferential grooves with axial bends so that rotations of the drum 7 cause axial movements of the fork-shaped elements 5, and hence of the corresponding engagement sleeves 4a, in order to engage and disengage the various gear ratios of the gearbox. In the embodiment shown, each cam 10 moves a fork 5 between a central, neutral position and two opposite positions for the engagement of different gear ratios.

A coaxial sleeve 12 within the drum 7 is fixed to the casing 3 and the drum 7 can rotate thereon with the interposition of a straight roller bearing 13.

The sleeve 12 carries an internal ring gear 14, the function of which will become clear from the following description.

A gear 15, connected rigidly and coaxially within the drum 7, constitutes the sun gear of an epicyclic multiplier unit which is also disposed within the drum 7. A rod 16 extending from the sun gear 15 projects from the casing 3 in order to carry for rotation an external potentiometric position sensor 17 which transmits data relating to the instantaneous position of the drum 7 to an electronic driving unit 19, by means of an electrical connection 18.

The sun gear 15 meshes with three planet gears 20 which are meshed with the internal teeth 14 of the sleeve 12. Each planet 20 can rotate about a pin 21 connected to a planet-carrier 22 which is connected for rotation with a shaft 23 coaxial with the sun gear 15.

A rotary hydraulic actuator 24 is disposed coaxially within the sleeve 12. The actuator 24 includes a stator 25 defining two symmetrical, sector-shaped chambers 27a and 27b.

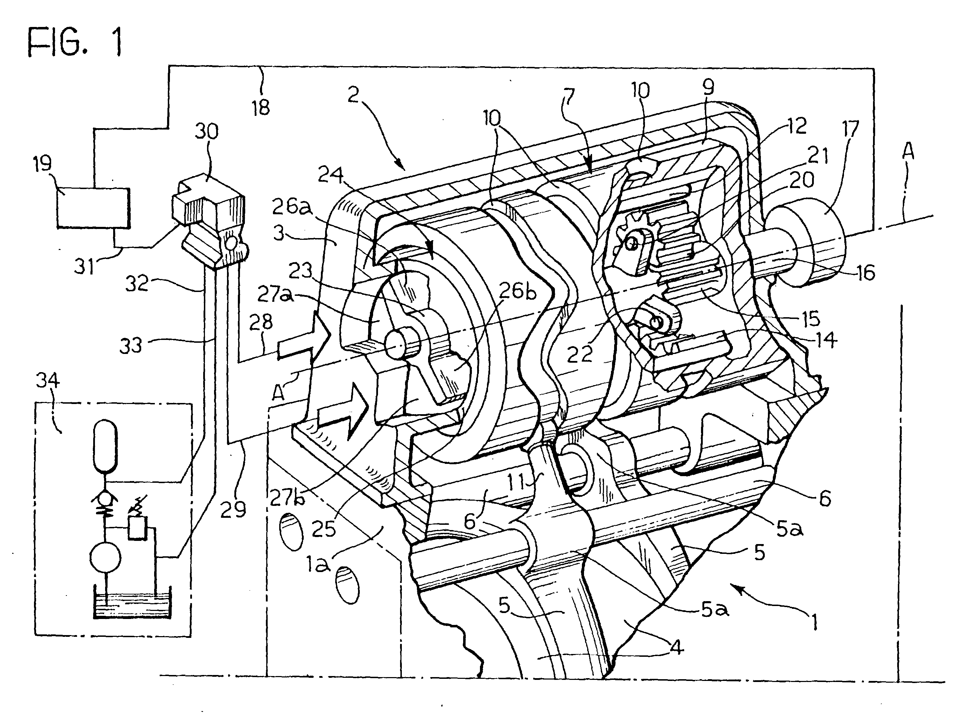

The shaft 23 carries two diametrally-opposed radial walls 26a, 26b which move sealingly through the chambers 27a, 27b. Respective ducts 28 and 29 open into the ends of each chamber 27a, 27b to deliver/discharge pressurised hydraulic fluid for moving the walls 26a and 26b within the chambers 27a and 27b. The pressurised fluid is sent to the respective chambers 27a, 27b by a servovalve 30 which is operated by the electronic driving unit 19, by means of an electrical connection 31. The servovalve 30 is connected to a hydraulic power-supply unit 34 of known type, shown schematically in Figure 1, by a delivery pipe 32 and a discharge pipe 33.

The electronic driving unit 19 may, for example, be connected to push-buttons (not shown) positioned on the steering wheel or on the dashboard of the vehicle, for selectively changing the transmission ratio of the gearbox, or may receive data relating to the operation of the vehicle, such as, for example, the rate of revolution of the engine, the speed of the vehicle, the gear ratio set, etc., by means of sensors which are not shown but are within the capabilities of an expert in the art, and drive the device 2 for operating the gearbox 1 accordingly.

In operation, the electronic unit 19 receives data relating to the instantaneous position of the operating device 2 from the sensor 17. In response to an external pulse, which, as stated above, may be due to the manual operation of a control or may result automatically from signals relating to the running conditions of the vehicle, the unit 19 operates the servovalve 30 which supplies pressurised fluid to the delivery ducts 28 associated with the chambers 27a and 27b of the rotary hydraulic actuator 24 for a higher gear, or to the delivery ducts 29 for a lower gear. The establishment of a pressure within the chambers 27a and 27b, through the ducts 28 in order to change to a higher gear or through the ducts 29 in order to change to a lower gear, correspondingly rotates the walls 26a and 26b which rotate the planet-carrier 22 and consequently the planets 20, by means of the shaft 23. A rotary movement is thus transmitted to the drum 7 by means of the sun gear 15 in accordance with the multiplication ratio of the epicyclic gearing, so as to move the fork-shaped elements 5 axially as a result of the movement of the cam tracks 10, thus changing the transmission ratio of the gearbox. As well as rotating with the drum 7, the sun gear 15 rotates the position sensor 17 by means of the rod 16 and data relating to the fact that the drum 7 has rotated is transmitted to the electronic unit 19 which will take account thereof for subsequent changes of the transmission ratio of the gearbox.

## Claims

1. A device for operating a gearbox, including a plurality of fork-shaped elements (5) which can be moved by a servo-control in order to change the transmission ratio of the gearbox (1) selectively, further including in combination:
- a rotary drum (7) having its axis (A) parallel to the line of movement of the fork-shaped elements (5), the outer surface (9) of the drum (7) having cam tracks (10) each cooperating with a cam follower (11) carried by a respective fork-shaped element (5) or a rod (6) so that rotations of the drum (7) cause corresponding predetermined movements of the fork-shaped elements (5),
- a rotary actuator (24) for rotating the drum (7),
- an electronic unit (19) for driving the rotary actuator (24), and
- a multiplier unit interposed between the rotary actuator (24) and the drum (7),
characterised in that the rotary actuator (24) is an hydraulic actuator driven by the electronic unit through an electrohydraulic circuit (28, 29, 30, 32, 33, 34) and in that the multiplier unit includes an epicyclic gearing (14, 15, 20, 21, 22), the epicyclic gearing (14, 15, 20, 21, 22) and the rotary hydraulic actuator (24) being arranged within the drum (7) and coaxial therewith.

2. A device according to claim 1, characterised in that the rotary hydraulic actuator (24) includes a stator (25) defining two thrust chambers (27a, 27b) separated by a rotatable wall (26a, 26b).

3. A device according to claim 2, characterised in that a stationary sleeve (12) interposed between the stator (25) and the drum (7) carries internal teeth (14) which mesh with planet gears (20) carried for rotation by a planet-carrier (22) which is coupled for rotation with the rotatable wall (26a, 26b), the planets (20) meshing with a sun gear (15) which is connected to the drum (7).

4. A device according to claim 3, characterised in that the sun gear (15) is associated with a position sensor (17) connected to the electronic driving unit (19).

## Patentansprüche

1. Einrichtung zur Betätigung eines Getriebes mit einer Vielzahl gabelförmiger Elemente (5), die mittels einer Servosteuerung bewegt werden können, um wahlweise die Übersetzung des Getriebes (1) zu ändern, wobei weiters in Kombination vorgesehen ist:
- eine Drehtommel (7) mit einer Achse (A), die parallel zur Bewegungseinrichtung der gabelförmigen Elemente (5) verläuft, wobei die äußere Oberfläche (9) der Trommel (7) Führungsbahnen (10) aufweist, die jeweils mit einem von einem zugehörigen, gabelförmigen Element (5) oder einer Stange (6) getragenen Gleitstück (11) zusammenwirken, sodaß Drehungen der Trommel (7) entsprechende vorbestimmte Bewegungen der gabelförmigen Elemente (5) bewirken,
- ein rotatorischer Stellantrieb (24), um die Trommel (7) zu drehen,
- eine elektronische Einrichtung (19) zum Antrieb des rotatorischen Drehantriebs (24) und
- ein Übersetzungsgetriebe, angeordnet zwischen dem rotatorischen Stellantrieb (24) und der Trommel (7),
dadurch gekennzeichnet, daß der rotatorische Stellantrieb (24) ein Hydraulikantrieb ist, der von einer elektronischen Einrichtung über eine elektrohydraulische Schaltung (28, 29, 30, 32, 33, 34) angetrieben wird, und daß das Übersetzungsgetriebe ein Planetengetriebe (14, 15, 20, 21, 22) umfaßt, wobei das Planetengetriebe (14, 15, 20, 21, 22) und der rotatorische Stellantrieb (24) innerhalb der Trommel (7) und koaxial zu dieser angeordnet sind.

2. Einrichtung nach Anspruch 1, dadurch gekennzeichnet, daß der rotatorische Stellantrieb (24) einen Stator (25) umfaßt, durch den zwei Druckkammern (27a, 27b) definiert werden, die durch eine drehbare Wand (26a, 26b) getrennt sind.

3. Einrichtung nach Anspruch 2, dadurch gekennzeichnet, daß ein stationäres Rohrstück (12), das zwischen dem Stator (25) und der Trommel (7) angeordnet ist, an der Innenseite Zähne (14) aufweist, die mit den von einem Planetenradträger (22) für die Drehung gehaltenen Platenrädern (20) in Eingriff stehen, wobei der Planetenradträger (22) drehbar mit der drehbaren Wand (26a, 26b) verbunden ist und die Planetenräder (20) in ein Sonnenrad (15) eingreifen, das mit der Trommel (7) verbunden ist.

4. Einrichtung nach Anspruch 3, dadurch gekennzeichnet, daß dem Sonnenrad (15) ein Lagesensor (17) zugeordnet ist, der mit der elektronischen Antriebseinrichtung (19) verbunden ist.

## Revendications

1. Appareil de commande de boîte de vitesse, comprenant plusieurs éléments (5) en forme de fourchette qui peuvent être déplacés par une servocommande pour le changement du rapport de transmission de la boîte de vitesse (1) de manière sélective, comprenant en outre en combinaison :
- un tambour rotatif (7) dont l'axe (A) est parallèle à l'axe de déplacement des éléments en forme de fourchette (5), la surface externe (9) du tambour (7) ayant des voies (10) de came coopérant chacune avec un toucheau (11) de came porté par un élément respectif (5) en forme de fourchette ou une tige (6) afin que les rotations du tambour (7) provoquent les déplacements prédéterminés correspondants des éléments (5) en forme de fourchette,
- un organe rotatif de manoeuvre (24) destiné à faire tourner le tambour (7),
- une unité électronique (19) de pilotage de l'organe rotatif de manoeuvre (24), et
- une unité multiplicatrice interposée entre l'organe rotatif de manoeuvre (24) et le tambour (7),
caractérisé en ce que l'organe rotatif de manoeuvre (24) est un organe hydraulique de manoeuvre piloté par l'unité électronique par l'intermédiaire d'un circuit électrohydraulique (28, 29, 30, 32, 33, 34), et en ce que l'unité multiplicatrice comprend un engrenage épicycloïdal (14, 15, 20, 21, 22), l'engrenage épicycloïdal (14, 15, 20, 21, 22) et l'organe hydraulique rotatif de manoeuvre (24) étant placés à l'intérieur du tambour (7) et coaxialement à celui-ci.

2. Appareil selon la revendication 1, caractérisé en ce que l'organe hydraulique rotatif de manoeuvre (24) possède un stator (25) qui délimite deux chambres de poussée (27a, 27b) séparées par une paroi rotative (26a, 26b).

3. Appareil selon la revendication 2, caractérisé en ce qu'un manchon rotatif (12) placé entre le stator (25) et le tambour (7) porte des dents internes (14) qui sont en prise avec des pignons satellites (20) supportés de manière qu'ils tournent par un porte-satellites (22) qui est couplé afin qu'il tourne avec la paroi rotative (26a, 26b), les pignons satellites (20) étant en prise avec un pignon solaire (15) qui est raccordé au tambour (7).

4. Appareil selon la revendication 3, caractérisé en ce que le pignon solaire (15) est associé à un capteur (17) de position raccordé à l'unité électronique de pilotage (19).
